# EUROPÄISCHE PATENTSCHRIFT

(11) **EP 3 446 372 B1**
(45) Veröffentlichungstag und Bekanntmachung des Hinweises auf die Patenterteilung: **10.03.2021**
(21) Anmeldenummer: 17718071.8
(22) Anmeldetag: 19.04.2017
(51) Int. Cl.: H01R 13/533, H01R 9/11, B60L 1/04

(54) **STECKVERBINDERTEIL MIT EINEM GEKÜHLTEN KONTAKTELEMENT**
PLUG-IN CONNECTOR PART WITH A COOLED CONTACT ELEMENT
ÉLÉMENT CONNECTEUR COMPRENANT UN ÉLÉMENT DE CONTACT REFROIDI

(30) Priorität: 21.04.2016 DE 102016107409
(43) Veröffentlichungstag der Anmeldung: 27.02.2019
(73) Patentinhaber: Phoenix Contact e-Mobility GmbH, 32816 Schieder-Schwalenberg (DE)
(72) Erfinder: FÜHRER, Thomas, 32825 Blomberg (DE); BABEZKI, Robert, 32839 Steinheim (DE)
(74) Vertreter: Muth, Bruno
(86) Internationale Anmeldenummer: PCT/EP2017/059216
(87) Internationale Veröffentlichungsnummer: WO 2017/182484

(56) Entgegenhaltungen:
- DE-B3-102010 050 562
- DE-B4-102010 007 975
- US-A1- 2014 199 881

## Beschreibung

Die Erfindung betrifft ein Steckverbinderteil zum Verbinden mit einem Gegensteckverbinderteil nach dem Oberbegriff des Anspruchs 1.

Ein solches Steckverbinderteil umfasst ein Gehäuse, das einen Steckabschnitt zum steckenden Verbinden mit dem Gegensteckverbinderteil aufweist, zumindest ein an dem Steckabschnitt angeordnetes Kontaktelement zum elektrischen Kontaktieren mit einem zugeordneten Gegenkontaktelement des Gegensteckverbinderteils, eine an das zumindest eine Kontaktelement angeschlossene Wärmeleitung und einen in dem Gehäuse angeordneten Kühlkörper, der zum Abführen von Wärme von dem zumindest einen Kontaktelement über die Wärmeleitung mit dem zumindest einen Kontaktelement in Wärmeleitverbindung steht.

Ein solches Steckverbinderteil, welches beispielsweise aus der DE 10 2010 050 562 B3 bekannt ist, kann insbesondere als Ladestecker oder als Ladebuchse zum Aufladen eines elektrisch angetriebenen Fahrzeugs (auch bezeichnet als Elektrofahrzeug) Verwendung finden. In diesem Fall ist beispielsweise ein Kabel einerseits an eine Ladestation angeschlossen und trägt andererseits das Steckverbinderteil in Form eines Ladesteckers, der in ein zugeordnetes Gegensteckverbinderteil in Form einer Ladebuchse an einem Fahrzeug eingesteckt werden kann, um auf diese Weise eine elektrische Verbindung zwischen der Ladestation und dem Fahrzeug herzustellen.

Ladeströme können grundsätzlich als Gleichströme oder als Wechselströme übertragen werden, wobei insbesondere Ladeströme in Form von Gleichstrom eine große Stromstärke, beispielsweise größer als 200 A oder sogar größer als 300 A oder gar 350 A, aufweisen und zu einer Erwärmung des Kabels genauso wie eines mit dem Kabel verbundenen Steckverbinderteils führen können.

Ein aus der DE 10 2010 007 975 B4 bekanntes Ladekabel weist eine Kühlleitung auf, die eine Zuleitung und eine Rückleitung für ein Kühlmittel umfasst und somit einen Kühlmittelfluss hin und zurück in dem Ladekabel ermöglicht. Die Kühlleitung der DE 10 2010 007 975 B4 dient zum einen zum Abführen von an einem Energiespeicher eines Fahrzeugs entstehender Verlustwärme, zudem aber auch zum Kühlen des Kabels an sich.

Bei einem Ladesystem zum Aufladen eines Elektrofahrzeugs entsteht Wärme nicht nur an dem Kabel, mit dem ein Ladestecker beispielsweise mit einer Ladestation verbunden ist, sondern auch an dem Ladestecker und insbesondere innerhalb des Ladesteckers beispielsweise an Kontaktelementen, über die ein elektrischer Kontakt mit zugeordneten Gegenkontaktelementen beispielsweise auf Seiten einer Ladebuchse an einem Elektrofahrzeug hergestellt wird, wenn der Ladestecker in die Ladebuchse eingesteckt ist. Solche Kontaktelemente, die aus einem elektrisch leitfähigen Metallmaterial, beispielsweise aus einem Kupferwerkstoff, gefertigt sind, erwärmen sich, wenn ein Ladestrom über die Kontaktelemente fließt, wobei grundsätzlich die Kontaktelemente in Abhängigkeit von dem zu übertragenden Ladestroms so zu dimensionieren sind, dass die Kontaktelemente eine hinreichende Stromtragfähigkeit aufweisen und eine Erwärmung an den Kontaktelementen begrenzt ist. Hierbei gilt, dass ein Kontaktelement umso größer zu dimensionieren ist, je größer der zu übertragende Ladestrom ist.

Einer Skalierung der Kontaktelementgröße mit steigendem Ladestrom sind jedoch aufgrund des damit einhergehenden Bauraumbedarfs, des Gewichts und der Kosten Grenzen gesetzt. Es besteht daher ein Bedürfnis danach, einen großen Ladestrom mit einem vergleichsweise klein dimensionierten Kontaktelement zu übertragen.

Bei einem aus der WO 2015/119791 A1 bekannten Ladesystem zum Aufladen eines Elektrofahrzeugs sind innerhalb eines Ladekabels Kühlmittelleitungen geführt, über die Wärme auch aus dem Bereich eines an das Ladekabel angeschlossenen Steckverbinderteils abgeführt werden kann.

Bei einem aus der US 5,909,099 bekannten Ladesystem werden Ladeströme transformatorisch über einen in einem Steckverbinderteil angeordneten Kern übertragen. In dem Kern kann eine Wärmeleitung zum Abführen von Wärme erstreckt sein.

Aufgabe der vorliegenden Erfindung ist es, ein Steckverbinderteil mit einem Kontaktelement zur Verfügung zu stellen, das eine große Stromtragfähigkeit beispielsweise zur Verwendung in einem Ladesystem zum Aufladen eines Elektrofahrzeugs aufweisen kann.

Diese Aufgabe wird durch einen Gegenstand mit den Merkmalen des Anspruchs 1 gelöst.

Das Steckverbinderteil zeichnet sich dadurch aus, dass die Wärmeleitung mit einem ersten Ende in eine Öffnung eines metallischen Anschlussstücks eingesteckt und über das Anschlussstück mit dem zugeordneten Kontaktelement verbunden ist.

Demnach wird zur Kühlung in dem Steckverbinderteil, das beispielsweise als Ladestecker oder als Ladebuchse im Rahmen eines Ladesystems zum Aufladen eines Elektrofahrzeugs ausgebildet sein kann, ein Kühlkörper vorgesehen, der über eine Wärmeleitung mit einem zugeordneten Kontaktelement verbunden ist und über den Wärme von dem zugeordneten Kontaktelement abgeleitet werden kann. Das Kontaktelement dient somit als Wärmequelle, der Kühlkörper demgegenüber als Wärmesenke. Dadurch, dass der Kühlkörper über die Wärmeleitung (englisch "heat pipe") mit dem zugeordneten Kontaktelement verbunden ist, kann der Kühlkörper räumlich getrennt von dem zugeordneten Kontaktelement innerhalb des Gehäuses des Steckverbinderteils angeordnet werden und kann somit an einem solchen Ort innerhalb des Gehäuses platziert werden, an dem Bauraum zur Verfügung steht.

Beispielsweise kann das Steckverbinderteil eine Mehrzahl von an dem Steckabschnitt angeordneten Kontaktelementen aufweisen. Soll beispielsweise ein Gleichstrom übertragen werden, können zwei Kontaktelemente vorgesehen sein, die in den Steckabschnitt hineinragen und die jeweils mit einem zugeordneten Gegenkontaktelement eines zugeordneten Gegensteckverbinderteils in Eingriff gebracht werden können. Jedem Kontaktelement ist ein Kühlkörper zugeordnet, der über eine (separate) Wärmeleitung mit dem zugeordneten Kontaktelement verbunden ist, sodass die an den unterschiedlichen Kontaktelementen entstehende Wärme über gesonderte Wärmeleitungen und mit den Wärmeleitungen verbundene Kühlkörper abgeleitet werden kann. Dies ist insbesondere dann vorteilhaft, wenn die Wärmeleitungen und die Kühlkörper aus einem gut wärmeleitfähigen Metallmaterial gefertigt sind, um eine elektrische Isolierung zwischen den Kontaktelementen zu gewährleisten und nicht durch das Vorsehen der Kühlkörper zu beeinträchtigen. Dadurch, dass separate Wärmeleitungen und Kühlkörper für die einzelnen Kontaktelemente vorgesehen sind, sind die Kontaktelemente nicht elektrisch leitend miteinander verbunden, sodass kein elektrischer Kontakt zwischen unterschiedlichen Kontaktelementen hergestellt wird, auch wenn die Wärmeleitungen und die Kühlkörper aus einem elektrisch leitfähigen Metallmaterial gefertigt sind.

Die Wärmeleitung kann beispielsweise die Gestalt eines massiven, metallenen Drahts oder Stabs aufweisen, der sich zwischen einem Kontaktelement und dem zugeordneten Kühlkörper erstreckt. In einer besonders bevorzugten Ausgestaltung kann die Wärmeleitung auch als sogenanntes Wärmerohr ausgebildet sein, das in der Bauform der Heatpipe oder des Zwei-Phasen-Thermosiphons verwendet werden kann. Ein solches Wärmerohr kann einen sehr geringen Wärmewiderstand und somit eine hohe Wärmeleitfähigkeit aufweisen.

Ein Wärmerohr kann beispielsweise ein hermetisch gekapseltes Volumen enthalten und ist vorzugsweise rohrförmig ausgestaltet. Das Volumen des Wärmerohrs ist mit einem Arbeitsmedium, zum Beispiel Wasser oder Ammoniak, gefüllt, welches das Volumen in teilweise flüssigem und teilweise dampfförmigem Zustand ausfüllt. Das Funktionsprinzip eines solchen Wärmerohrs ist dabei wie folgt: Bei Wärmeeintrag beginnt das Arbeitsmedium zu verdampfen. Dadurch wird über dem Flüssigkeitsspiegel der Druck im Dampfraum lokal erhöht, was zu einem geringen Druckgefälle innerhalb des Wärmerohrs führt. Der entstandene Dampf strömt deswegen zu einer Stelle mit niedrigerer Temperatur und kondensiert dort, sodass sich an dieser Stelle die Temperatur durch die freiwerdende Kondensationswärme erhöht und die zuvor aufgenommene latente Wärme an die Umgebung abgegeben wird. Das nun flüssige Arbeitsmedium kehrt durch Schwerkraft (Thermosiphon) bzw. durch Kapillarkräfte (Heatpipe) wieder zurück zu der Stelle, an der die Wärme eingeleitet worden ist. Während bei Wärmerohren nach der Bauform von Zwei-Phasen-Thermosiphons das Medium aufgrund von Schwerkraft kreist, fließt das Wärmeträgermedium bei Heatpipes nach dem Dochtprinzip (durch Wirkung von Kapillarkräften), sodass Heatpipes lageunabhängig sind.

Die einem Kontaktelement zugeordnete Wärmeleitung ist vorteilhafterweise mit einem ersten Ende mit dem Kontaktelement derart verbunden, dass Wärme in günstiger Weise über die Wärmeleitung von dem Kontaktelement abgeleitet werden kann. Die Wärmeleitung kann fest, beispielsweise stoffschlüssig, mit dem Kontaktelement verbunden sein. Es ist ein (zusätzliches) Anschlussstück vorgesehen, dass aus einem gut wärmeleitfähigen Material, beispielsweise einem Metallmaterial gefertigt und mit dem Kontaktelement verbunden ist. Die Wärmeleitung ist in eine Öffnung des Anschlussstücks eingesteckt und gegebenenfalls zusätzlich verschweißt, sodass die Wärmeleitung über das Anschlussstück an das Kontaktelement angeschlossen ist.

Mit einem dem ersten Ende abgewandten, zweiten Ende kann die Wärmeleitung demgegenüber beispielsweise in eine Öffnung des Kühlkörpers eingesteckt sein. Die Wärmeleitung ist somit formschlüssig mit dem Kühlkörper verbunden derart, dass Wärme über die Wärmeleitung in den Kühlkörper eingeleitet werden kann.

Der Kühlkörper ist beispielsweise aus einem massiven Metallmaterial und somit als massiver Körper ausgestaltet und weist eine vergleichsweise große Wärmekapazität auf. Die Öffnung des Kühlkörpers kann beispielsweise als Sackloch ausgebildet sein, in das die Wärmeleitung eingesteckt ist. Durch die steckende Verbindung mit dem Kühlkörper ist die Wärmeleitung fest an dem Kühlkörper gehalten, wobei die Wärmeleitung zusätzlich mit dem Kühlkörper verschweißt sein kann.

Denkbar ist, über den Kühlkörper eine rein passive Kühlung zu Verfügung zu stellen, indem Wärme an dem Kühlkörper aufgenommen und über den Kühlkörper abgestrahlt wird. In einer vorteilhaften Ausgestaltung kann jedoch vorgesehen sein, den Kühlkörper aktiv zu kühlen, indem der Kühlkörper durch ein Kühlmittel umströmt oder mit dem Kühlmittel durchströmt wird. Über das Kühlmittel, beispielsweise ein gasförmiges Fluid, zum Beispiel Luft, oder eine Kühlmittelflüssigkeit, zum Beispiel Wasser, kann somit Wärme von dem Kühlkörper abgeleitet werden, um auf diese Weise eine effektive Kühlung an dem Kühlkörper bereitzustellen und damit einen günstigen Wärmeabtransport von den Kontaktelementen des Steckverbinderteils zu ermöglichen.

Beispielsweise kann der Kühlkörper einen Fluidkanal aufweisen, der sich längst durch den Kühlkörper erstreckt und durch ein Kühlmittel durchströmt werden kann, sodass Wärme aufgenommen und von den Kühlkörper abtransportiert werden kann. Hierzu können beispielsweise eine erste Kühlmittelleitung zum Zuführen eines Kühlmittels und eine zweite Kühlmittelleitung zum Abführen des Kühlmittels nach Durchströmen des Kühlkörpers (direkt oder indirekt) mit dem Kühlkörper verbunden sein, sodass ein Kühlmittelfluss bereitgestellt wird, über den Wärme von dem Kühlkörper abtransportiert werden kann.

In einer konkreten Ausgestaltung kann ein Kühlkörper auch zwei oder gar mehr Fluidkanäle aufweisen, die durch ein Kühlmittel durchströmt werden können. Die Fluidkanäle können sich beispielsweise parallel zueinander durch den (massiven) Kühlkörper hindurcherstrecken, sodass Kühlmittel längs auf unterschiedlichen Wegen durch den Kühlkörper geleitet werden kann, um auf diese Weise Wärme an dem Kühlkörper aufzunehmen.

In einer Ausführungsform sind zwei Fluidkanäle des Kühlkörpers über eine Umlenkleitung miteinander strömungsverbunden. Dies ermöglicht, ein Kühlmittel in einen ersten Fluidkanal einzuleiten, sodass das Kühlmittel entlang des ersten Fluidkanals strömt, über die Umlenkleitung hin zu dem zweiten Fluidkanal geleitet wird und über den zweiten Fluidkanal zurück durch den Kühlkörper strömt. Die Fluidkanäle sind somit seriell miteinander verbunden und ermöglichen ein Durchströmen des Kühlkörpers in Hin- und Rückrichtung.

Sind mehrere Kühlkörper, die unterschiedlichen Kontaktelementen zugeordnet sind, vorgesehen, so ist denkbar und möglich, ein Kühlmittel in serieller oder in paralleler Weise durch die Kühlkörper zu leiten. Hierzu können Fluidkanäle der Kühlkörper in serieller Weise oder in paralleler Weise miteinander strömungsverbunden sein, sodass über eine Kühlmittelleitung ein Kühlmittel hin zu den Kühlkörpern geleitet und über eine zweite Kühlmittelleitung von den Kühlkörpern abgeleitet werden kann.

In einer Ausgestaltung sind Fluidkanäle unterschiedlicher Kühlkörper seriell miteinander strömungsverbunden. Hierzu kann ein Fluidkanal eines einem ersten Kontaktelement zugeordneten, ersten Kühlkörpers über eine Umlenkleitung mit einem Fluidkanal eines einem zweiten Kontaktelement zugeordneten, zweiten Kühlkörpers verbunden sein. Dies ermöglicht beispielsweise, ein Kühlmittel in den Fluidkanal des ersten Kühlkörpers einzuleiten, sodass das Fluid entlang des Fluidkanals des ersten Kühlkörpers strömt, über die Umlenkleitung hin zu dem Fluidkanal des zweiten Kühlkörpers geleitet wird und sodann den Fluidkanal des zweiten Kühlkörpers durchströmt. Die Fluidkanäle der Kühlkörper sind somit zu einem seriellen Kühlmittelkreis verschaltet.

In einem mit dem Steckverbinderteil verbundenen Kabel können beispielsweise zwei Kühlmittelleitungen geführt sein, die zum Zuführen und zum Abführen eines Kühlmittels dienen und somit einen Kühlmittelkreislauf an dem Steckverbinderteil bereitstellen. Sind Fluidkanäle mehrerer Kühlkörper seriell miteinander verbunden, so kann eine erste Kühlmittelleitung zum Zuführen eines Kühlmittels beispielsweise mit einem ersten Kühlkörper verbunden sein, während eine zweite Kühlmittelleitung zum Abführen des Kühlmittels beispielsweise mit einem zweiten Kühlkörper verbunden ist, wobei Fluidkanäle des ersten Kühlkörpers und des zweiten Kühlkörpers seriell miteinander strömungsverbunden sind, sodass ein zugeführtes Kühlmittel über einen oder mehrere Fluidkanäle des ersten Kühlkörpers hin zu einem oder mehreren Fluidkanäle des zweiten Kühlkörpers geleitet wird und schließlich über die zweite Kühlmittelleitung abgeleitet wird.

Sind mehrere Kühlkörper vorgesehen, die mehreren Kontaktelementen zugeordnet sind, so können die Kühlkörper in einer Ausführungsform über ein aus einem nicht elektrisch leitfähigen Material, beispielsweise aus Kunststoff, gefertigtes Verbindungselement miteinander verbunden und in Position zueinander gehalten sein. Über das Verbindungselement werden die Kühlkörper vorteilhaft auf Abstand zueinander gehalten derart, dass die Kühlkörper sich gegenseitig nicht berühren und somit insbesondere nicht in elektrischem Kontakt miteinander stehen. Sind die Kühlkörper aus einem elektrisch leitfähigen Metallmaterial gefertigt, wird auf diese Weise gewährleistet, dass die elektrische Isolation der einzelnen Kontaktelemente des Steckverbinderteils voneinander nicht beeinträchtigt ist. Zudem kann ein direkter Wärmeübertrag von einem Kühlkörper auf einen anderen Kühlkörper auf diese Weise vermieden werden.

Der der Erfindung zugrunde liegende Gedanke soll nachfolgend anhand der in den Figuren dargestellten Ausführungsbeispiele näher erläutert werden. Es zeigen:
- Fig. 1: eine Ansicht einer Ladestation mit einem daran angeordneten Kabel;
- Fig. 2: eine Ansicht eines Steckverbinderteils in Form eines Ladesteckers;
- Fig. 3: eine andere perspektivische Ansicht des Steckverbinderteils;
- Fig. 4: eine teilweise freigeschnittene Ansicht des Steckverbinderteils;
- Fig. 5A: eine gesonderte Ansicht einer Baugruppe umfassend zwei Kontaktelemente des Steckverbinderteils und eine Kühlungseinrichtung zur Kühlung der Kontaktelemente;
- Fig. 5B: eine andere Ansicht der Baugrube gemäß Fig. 5A;
- Fig. 6A: eine gesonderte Ansicht der Kühlungseinrichtung;
- Fig. 6B: eine andere Ansicht der Kühlungseinrichtung;
- Fig. 7: eine Explosionsansicht der Kühlungseinrichtung; und
- Fig. 8: eine Schnittansicht durch einen Kühlkörper der Kühlungseinrichtung.

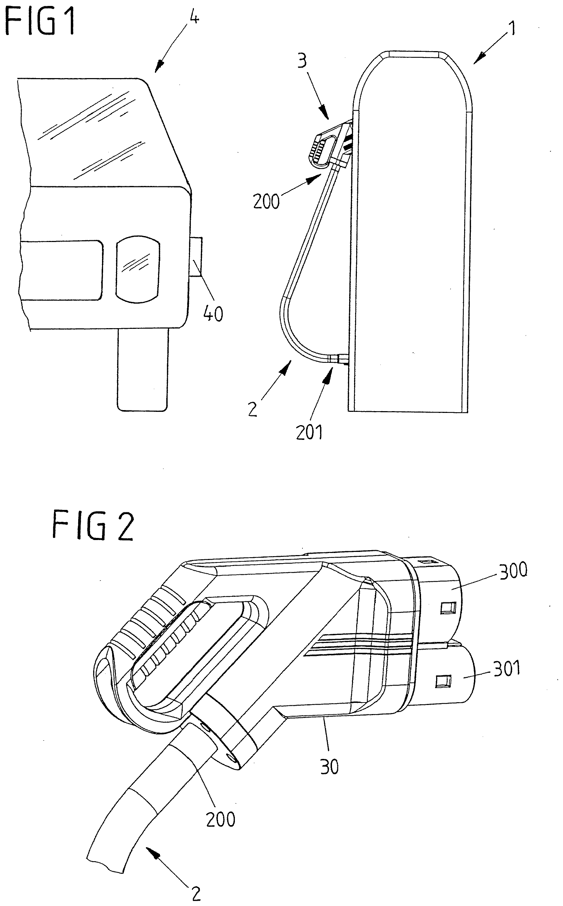

Fig. 1 zeigt eine Ladestation 1, die zum Aufladen eines elektrisch angetriebenen Fahrzeugs 4, auch bezeichnet als Elektrofahrzeug, dient. Die Ladestation 1 ist dazu ausgestaltet, einen Ladestrom in Form eines Wechselstroms oder eines Gleichstroms zur Verfügung zu stellen und weist ein Kabel 2 auf, das mit einem Ende 201 mit der Ladestation 1 und mit einem anderen Ende 200 mit einem Steckverbinderteil 3 in Form eines Ladesteckers verbunden ist.

Wie aus der vergrößerten Ansicht gemäß Fig. 2 ersichtlich, weist das Steckverbinderteil 3 an einem Gehäuse 30 Steckabschnitte 300, 301 auf, mit denen das Steckverbinderteil 3 steckend mit einem zugeordneten Gegensteckverbinderteil 40 in Form einer Ladebuchse an dem Fahrzeug 4 in Eingriff gebracht werden kann. Auf diese Weise kann die Ladestation 1 elektrisch mit dem Fahrzeug 4 verbunden werden, um Ladeströme von der Ladestation 1 hin zu dem Fahrzeug 4 zu übertragen.

Um ein zügiges Aufladen des Elektrofahrzeugs 4 z.B. im Rahmen eines sogenannten Schnellladevorgangs zu ermöglichen, weisen die übertragenen Ladeströme eine große Stromstärke, z.B. größer als 200 A, gegebenenfalls sogar in der Größenordnung von 350 A oder darüber, auf. Aufgrund solch hoher Ladeströme kommt es an dem Kabel 2 und auch am Steckverbinderteil 3 sowie der Ladebuchse 40 zu thermischen Verluste, die zu einem Erwärmen des Kabels 2, des Steckverbinderteils 3 und der Ladebuchse 40 führen können.

Das Steckverbinderteil 3 weist, an seinen Steckabschnitten 300, 301, eine Mehrzahl von Kontaktelementen auf. Beispielsweise können an dem Steckabschnitt 301 zwei Kontaktelemente zum Übertragen eines Ladestroms in Form eines Gleichstroms angeordnet sein, während an dem Steckabschnitt 300 beispielsweise fünf Kontaktelemente zur Bereitstellung von fünf Lastkontakten vorgesehen sind, um einen (z.B. mehrphasigen) Wechselstrom zu übertragen.

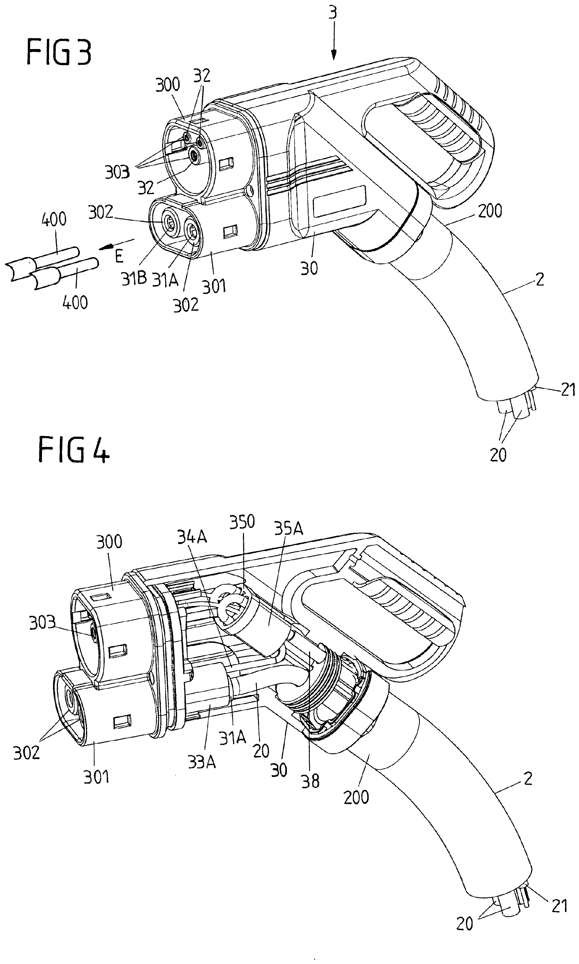

Bei einem konkreten, in Fig. 3 dargestellten Ausführungsbeispiel eines Steckverbinderteils sind an einem unteren Steckabschnitt 301 innerhalb von zwei Steckzapfen 302 Kontaktelemente 31A, 31B angeordnet, die zum Übertragen eines Ladestroms in Form eines Gleichstroms dienen. An dem anderen, oberen Steckabschnitt 300 sind demgegenüber in Steckzapfen 303 Kontaktelemente 32 angeordnet, die zum Übertragen eines Wechselstroms dienen. Das Steckverbinderteil 3 ist somit als so genannter Kombi-Stecker ausgebildet, der wahlweise zum Übertragen von Gleichströmen oder Wechselströmen dienen kann.

Wie schematisch in Fig. 3 dargestellt, können die Kontaktelemente 31A, 31B an dem Steckabschnitt 301 des Steckverbinderteils 3 in eine Einsteckrichtung E mit Gegenkontaktelementen 400 in Form von Kontaktstiften auf Seiten der Ladebuchse 40 steckend in Eingriff gebracht werden, um die Kontaktelemente 31A, 31B mit den Gegenkontaktelementen 400 elektrisch zu kontaktieren.

In dem Kabel 2 sind Lastleitungen 20, 21 geführt, die zum Übertragen eines Laststroms hin zu dem Steckverbinderteil 3 dienen. Mit jedem Kontaktelement 31A, 31B ist eine Lastleitung 20 verbunden. Eine weitere Lastleitung 21 dient zum Bestromen der Kontaktelemente 33 an dem anderen, oberen Steckabschnitt 300.

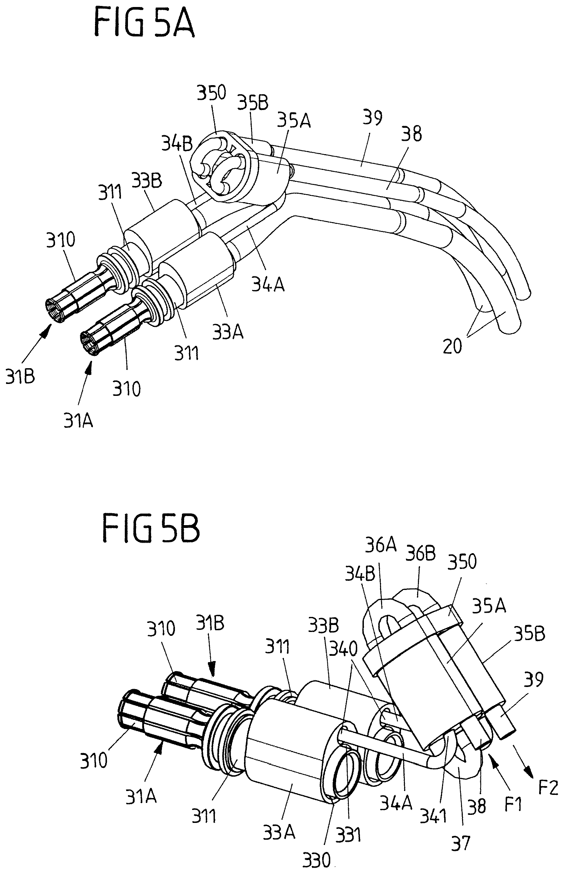

Um bei dem Ausführungsbeispiel des Steckverbinderteils 3 gemäß Fig. 3 an den Kontaktelementen 31A, 31B an dem unteren Steckabschnitt 301 eine Kühlung zu bewirken, sind, wie aus der Teilschnittansicht gemäß Fig. 4 sowie den Ansichten gemäß Fig. 5A, 5B bis 8 ersichtlich, Kühlkörper 35A, 35B vorgesehen, die über Wärmeleitungen 34A, 34B mit den Kontaktelementen 31A, 31B verbunden sind. Über die Wärmeleitungen 34A, 34B kann Wärme an den Kontaktelementen 31A, 31B aufgenommen und hin zu den Kühlkörpern 35A, 35B geleitet werden, um auf diese Weise Wärme von den Kontaktelementen 31A, 31B abzuführen.

Wie aus den Ansichten gemäß Fig. 5A und 5B ersichtlich, ist jedem Kontaktelement 31A, 31B ein Kühlkörper 35A, 35B zugeordnet. Jedes Kontaktelement 31A, 31B weist einen durch federnde Lamellen gebildeten Buchsenabschnitt 310 auf, an den ein Schaft 311 anschließt. An diesem Schaft 311 ist ein Anschlussstück 33A, 33B angeordnet, indem der zylindrische Schaft 311 eine Öffnung 330 an dem Anschlussstück 33A, 33B durchgreift. Die dem jeweiligen Kontaktelement 31A, 31B zugeordnete Wärmeleitung 34A, 34B ist mit einem Ende 340 in eine Öffnung 331 des Anschlussstücks 33A, 33B eingesteckt und erstreckt sich von dem Kontaktelement 31A, 31B hin zu dem zugeordneten Kühlkörper 35A, 35B, in den die Wärmeleitung 34A, 34B mit einem dem Ende 340 abliegenden Ende 341 eingesteckt ist.

Das Kontaktelement 31A, 31B ist aus einem Metall, beispielsweise einem Kupfermaterial, hergestellt. Um eine gute Wärmeübertragung von dem Kontaktelement 31A, 31B zu bewirken, sind das Anschlussstück 33A, 33B, die Wärmeleitung 34A, 34B und der Kühlkörper 35A, 35B vorteilhafterweise ebenfalls aus einem Metall gefertigt, insbesondere einem Metall, das eine gute Wärmeleitfähigkeit aufweist. Das Anschlussstück 33A, 33B, die Wärmeleitung 34A, 34B und der Kühlkörper 35A, 35B sind hierbei als massive, metallene Teile ausgebildet, sodass insbesondere der Kühlkörper 35A, 35B eine vergleichsweise große Wärmekapazität aufweist.

Jedem Kontaktelement 31A, 31B ist ein gesonderter Kühlkörper 35A, 35B zugeordnet. Die einzelnen Kühlkörper 35A, 35B werden durch ein aus einem elektrisch isolierenden Material, beispielsweise Kunststoff, gefertigtes Verbindungselement 350 in Position zueinander gehalten derart, dass sich die Kühlkörper 35A, 35B nicht gegenseitig berühren. Dadurch, dass die Kühlkörper 35A, 35B der einzelnen Kontaktelemente 31A, 31B somit räumlich voneinander separiert sind, ist sichergestellt, dass die elektrische Isolation zwischen den Kontaktelementen 31A, 31B durch die an die Kontaktelemente 31A, 31B angeschlossenen Kühlkörper 35A, 35B nicht beeinträchtigt ist.

Die Wärmeleitungen 34A, 34B sind mit ihren Enden 341 in Öffnungen 351 in Form von Sacklöchern an den Kühlkörpern 35A, 35B eingesteckt und auf diese Weise fest mit den zugeordneten Kühlkörpern 35A, 35B verbunden. Die Verbindung ist hierbei derart, dass Wärme in günstiger Weise von den Wärmeleitungen 34A, 34B auf die Kühlkörper 35A, 35B übertragen werden kann.

Die Anschlusstücke 33A, 33B sind fest, beispielsweise formschlüssig, kraftschlüssig (durch Verpressen) oder stoffschlüssig (z.B. durch Schweißen), mit dem Schaft 311 des jeweils zugeordneten Kontaktelements 31A, 31B verbunden. Ebenso können die Wärmeleitungen 34A, 34B fest, z.B. stoffschlüssig (z.B. durch Schweißen), einerseits mit dem zugeordneten Anschlussstück 33A, 33B und andererseits mit dem zugeordneten Kühlkörper 35A, 35B verbunden sein.

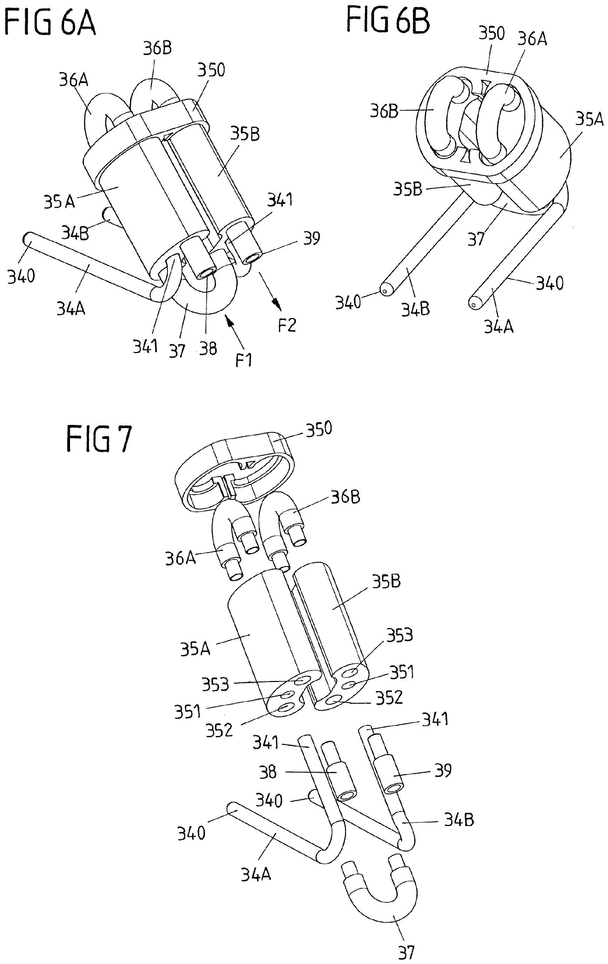

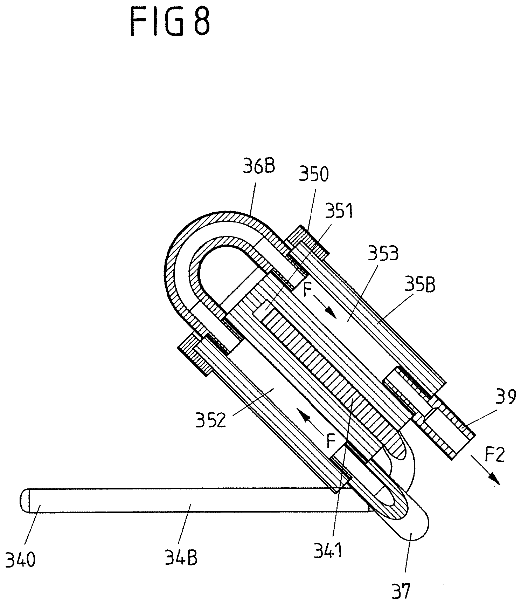

Bei dem dargestellten Ausführungsbeispiel sind die Kühlkörper 35A, 35B, die wie in Fig. 4 dargestellt innerhalb des Gehäuses 30 angeordnet sind, aktiv gekühlt. Hierzu weisen die Kühlkörper 35A, 35B, wie insbesondere aus Fig. 7 und 8 ersichtlich, jeweils zwei längserstreckte, parallel zueinander verlaufende Fluidkanäle 352, 353 auf, durch die ein (gasförmiges oder flüssiges) Kühlmittel strömen kann, um Wärme an den Kühlkörpern 35A, 35B aufzunehmen und von den Kühlkörpern 35A, 35B abzuführen.

Die Fluidkanäle 352, 353 der unterschiedlichen Kühlkörper 35A, 35B können in serieller Weise oder in paralleler Weise miteinander verschaltet werden, um einen Kühlmittelkreislauf zum Kühlen bereitzustellen. Denkbar und möglich ist auch, jeden Kühlkörper 35A, 35B mit einem eigenen Kühlmittelkreislauf zu verbinden. Hierzu können Kühlmittelleitungen 38, 39 an die Kühlkörper 35A, 35B angeschlossen werden, sodass über eine Kühlmittelleitung 38 ein Kühlmittel in eine Flussrichtung F1 zugeleitet und über eine andere Kühlmittelleitung 39 in eine Flussrichtung F2 wieder abgeleitet werden kann.

Bei dem dargestellten Ausführungsbeispiel sind die Fluidkanäle 352, 353 der Kühlmittelkörper 35A, 35B seriell miteinander strömungsverbunden, sodass ein zugeleitetes Kühlmittel die Fluidkanäle 352, 353 der Kühlkörper 35A, 35B in serieller Weise durchströmt.

So sind bei dem dargestellten Ausführungsbeispiel die Fluidkanäle 352, 353 eines jeden Kühlkörpers 35A, 35B über eine Umlenkleitung 36A, 36B miteinander strömungsverbunden, sodass ein in einen Fluidkanal 353 eingeleitetes Kühlmittel über die Umlenkleitung 36A, 36B umgelenkt wird und durch den anderen Fluidkanal 352 zurückströmt. Die Fluidkanäle 352, 353 sind beidseits der Öffnung 351, in die die zugeordnete Wärmeleitung 34A, 24B eingesteckt ist, angeordnet, sodass über die Fluidkanäle 352, 353 Wärme beidseits der Wärmeleitung 34A, 34B aufgenommen und abgeführt werden kann.

Zusätzlich sind der Fluidkanal 352 des einen Kühlkörpers 35A und der Fluidkanal 352 des anderen Kühlkörpers 35B über eine Umlenkleitung 37 miteinander strömungsverbunden, sodass ein Kühlmittel aus dem Fluidkanal 352 des einen Kühlkörpers 35A über die Umlenkleitung 37 in den Fluidkanal 352 des anderen Kühlkörpers 35B einströmen kann.

Zur Komplettierung des Kühlmittelkreislaufs ist eine erste Kühlmittelleitung 38 mit dem Fluidkanal 353 des einen Kühlkörpers 35A verbunden und dient beispielsweise zum Zuleiten eines Kühlmittels. Eine andere, zweite Kühlmittelleitung 39 ist demgegenüber mit dem Kühlkörper 353 des anderen Kühlkörpers 35B verbunden und dient zum Ableiten des Kühlmittels. Ein Kühlmittel kann somit über die Kühlmittelleitung 38 zugeführt werden und in den Fluidkanal 353 des Kühlkörpers 35A einströmen. Über die Umlenkleitung 36A wird das Kühlmittel in den Fluidkanal 352 des Kühlkörpers 35A und von dort über die Umleitung 37 in den Fluidkanal 352 des Kühlkörpers 35B geleitet, strömt über den Fluidkanal 352 des Kühlkörpers 35B und die Umlenkleitung 36B in Flussrichtung F (siehe Fig. 8) in den Fluidkanal 353 des Kühlkörpers 35B und wird über die Kühlmittelleitung 39 abgeleitet. Die Fluidkanäle 352, 353 der Kühlkörper 35A, 35B werden somit seriell durchströmt, sodass Wärme an den Kühlkörpern 35A, 35B aufgenommen und abgeleitet werden kann.

Die Kühlmittelleitung 38, 39 sind in dem Kabel 2 verlegt und durch einen Kabelschlauch des Kabels 2 eingefasst. Die Kühlmittelleitung 38, 39 werden auf diese Weise hin zu der Ladestation 1 geführt und sind auf Seiten der Ladestation 1 beispielsweise mit einer Kühlmittelpumpe verbunden, um einen Kühlmittelstrom durch die Kühlmittelleitungen 38, 39 zu bewirken.

Der der Erfindung zugrunde liegende Gedanke ist nicht auf die vorangehend geschilderten Ausführungsbeispiele beschränkt, sondern lässt sich kontert sich auch in gänzlich andersgearteter Weise verwirklichen.

Grundsätzlich können sämtliche Kontaktelemente des Steckverbinderteils auf die beschriebene Weise gekühlt werden. Denkbar und möglich ist jedoch auch, dass nur einzelne Kontaktelemente gekühlt werden.

Das Steckverbinderteil kann einen oder mehrere Kühlkörper, insbesondere auch mehr als zwei Kühlkörper, aufweisen. Eine Kühlung kann hierbei nicht nur an zur Übertragung eines Gleichstroms vorgesehenen Kontaktelementen erfolgen, sondern auch an Kontaktelementen, die zum Übertragen eines Wechselstroms dienen.

### Bezugszeichenliste

- 1: Ladestation
- 2: Ladekabel
- 20, 21: Lastleitung
- 22: Signalleitung
- 200, 201: Ende
- 3: Ladestecker
- 30: Gehäuse
- 300, 301: Steckabschnitt
- 302, 303: Steckzapfen
- 31A, 31B: Kontaktelement
- 310: Buchsenabschnitt
- 311: Schaft
- 32: Kontaktelement
- 33A, 33B: Anschlussstück
- 330, 331: Öffnung
- 34A, 34B: Wärmeleitung
- 340, 341: Ende
- 35A, 35B: Kühlkörper
- 350: Verbindungselement
- 351: Öffnung (Sackloch)
- 352, 353: Fluidkanal
- 36A, 36B: Umlenkleitung
- 37: Umlenkleitung
- 38, 39: Kühlmittelleitung
- 4: Fahrzeug
- 40: Ladebuchse
- 400: Gegenkontaktelement
- E: Einsteckrichtung
- F, F1, F2: Flussrichtung

## Patentansprüche

1. Steckverbinderteil (3) zum Verbinden mit einem Gegensteckverbinderteil (40), mit
- einem Gehäuse (30), das einen Steckabschnitt (300, 301) zum steckenden Verbinden mit dem Gegensteckverbinderteil (40) aufweist,
- zumindest einem an dem Steckabschnitt (300, 301) angeordneten Kontaktelement (31A, 31B) zum elektrischen Kontaktieren mit einem zugeordneten Gegenkontaktelement (400) des Gegensteckverbinderteils (40),
- einer an das zumindest eine Kontaktelement (31A, 31B) angeschlossenen Wärmeleitung (34A, 34B) und
- einem in dem Gehäuse (30) angeordneten Kühlkörper (35A, 35B), der zum Abführen von Wärme von dem zumindest einen Kontaktelement (31A, 31B) über die Wärmeleitung (34A, 34B) mit dem zumindest einen Kontaktelement (31A, 31B) in Wärmeleitverbindung steht,
**dadurch gekennzeichnet, dass** die Wärmeleitung (34A, 34B) mit einem ersten Ende (340) in eine Öffnung (331) eines metallischen Anschlussstücks (33A, 33B) eingesteckt und über das Anschlussstück (33A, 33B) mit dem zugeordneten Kontaktelement (31A, 31B) verbunden ist.

2. Steckverbinderteil (3) nach Anspruch 1, **dadurch gekennzeichnet, dass** das Steckverbinderteil (3) eine Mehrzahl von an dem Steckabschnitt (300, 301) angeordneten Kontaktelemente (31A, 31B) aufweist, wobei jedem Kontaktelement (31A, 31B) ein Kühlkörper (35A, 35B) zugeordnet ist, der über eine Wärmeleitung (34A, 34B) mit dem zugeordneten Kontaktelement (31A, 31B) in Wärmeleitverbindung steht.

3. Steckverbinderteil (3) nach Anspruch 1 oder 2, **dadurch gekennzeichnet, dass** die Wärmeleitung (34A, 34B) und/oder der Kühlkörper (35A, 35B) aus Metall gefertigt sind.

4. Steckverbinderteil (3) nach einem der vorangehenden Ansprüche, **dadurch gekennzeichnet, dass** die Wärmeleitung (34A, 34B) mit einem zweiten Ende (340) in eine Öffnung (351) des Kühlkörpers (35A, 35B) eingesteckt ist.

5. Steckverbinderteil (3) nach einem der vorangehenden Ansprüche, **dadurch gekennzeichnet, dass** der Kühlkörper (35A, 35B) einen mit einem Kühlmittel durchströmbaren Fluidkanal (352, 353) aufweist.

6. Steckverbinderteil (3) nach einem der vorangehenden Ansprüche, **dadurch gekennzeichnet, dass** der Kühlkörper (35A, 35B) zwei Fluidkanäle (352, 353) aufweist, die über eine mit dem Kühlkörper (35A, 35B) verbundene Umlenkleitung (36A, 36B) miteinander strömungsverbunden sind.

7. Steckverbinderteil (3) nach einem der vorangehenden Ansprüche, **dadurch gekennzeichnet, dass** ein Fluidkanal (352) eines einem ersten Kontaktelement (31A) zugeordneten, ersten Kühlkörpers (35A) über eine Umlenkleitung (37) mit einem Fluidkanal (352) eines einem zweiten Kontaktelement (31B) zugeordneten, zweiten Kühlkörpers (35B) verbunden ist.

8. Steckverbinderteil (3) nach Anspruch 7, **dadurch gekennzeichnet, dass** eine in einem mit dem Steckverbinderteil (3) verbundenen Kabel (2) geführte, erste Kühlmittelleitung (38) zum Zuführen eines Kühlmittels mit dem ersten Kühlkörper (35A) und eine in dem Kabel (2) geführte, zweite Kühlmittelleitung (39) zum Abführen des Kühlmittels mit dem zweiten Kühlkörper (35B) verbunden ist.

9. Steckverbinderteil (3) nach einem der vorangehenden Ansprüche, **dadurch gekennzeichnet, dass** mehrere Kühlkörper (35A, 35B) über ein Verbindungselement (350) miteinander verbunden sind und über das Verbindungselement (350) derart auf Abstand zueinander gehalten werden, dass die Kühlkörper (35A, 35B) sich nicht gegenseitig berühren.

## Claims

1. Plug connector part (3) for connection to a mating plug connector part (40), comprising
- a housing (30) which has a plug section (300, 301) for plug-connection to the mating plug connector part (40),
- at least one contact element (31A, 31B), which is arranged on the plug section (300, 301), for electrical contact-connection to an associated mating contact element (400) of the mating plug connector part (40),
- a heat pipe (34A, 34B) which is connected to the at least one contact element (31A, 31B), and
- a heat sink (35A, 35B) which is arranged in the housing (30) and is thermally conductively connected via the heat pipe (34A, 34B) to the at least one contact element (31A, 31B) for dissipating heat from the at least one contact element (31A, 31B),
**characterized in that** the heat pipe (34A, 34B), by way of a first end (340), is inserted into an opening (331) of a metal connection piece (33A, 33B) and connected to the associated contact element (31A, 31B) by means of the connection piece (33A, 33B).

2. Plug connector part (3) according to Claim 1, **characterized in that** the plug connector part (3) has a plurality of contact elements (31A, 31B) which are arranged on the plug section (300, 301), wherein a heat sink (35A, 35B) is associated with each contact element (31A, 31B), said heat sink being thermally conductively connected to the associated contact element (31A, 31B) via a heat pipe (34A, 34B).

3. Plug connector part (3) according to Claim 1 or 2, **characterized in that** the heat pipe (34A, 34B) and/or the heat sink (35A, 35B) are manufactured from metal.

4. Plug connector part (3) according to one of the preceding claims, **characterized in that** the heat pipe (34A, 34B), by way of a second end (340), is inserted into an opening (351) of the heat sink (35A, 35B).

5. Plug connector part (3) according to one of the preceding claims, **characterized in that** the heat sink (35A, 35B) has a fluid duct (352, 353) through which a coolant can flow.

6. Plug connector part (3) according to one of the preceding claims, **characterized in that** the heat sink (35A, 35B) has two fluid ducts (352, 353) which are flow-connected to one another via a deflection line (36A, 36B) which is connected to the heat sink (35A, 35B).

7. Plug connector part (3) according to one of the preceding claims, **characterized in that** a fluid duct (352) of a first heat sink (35A) which is associated with a first contact element (31A) is connected via a deflection line (37) to a fluid duct (352) of a second heat sink (35B) which is associated with a second contact element (31B).

8. Plug connector part (3) according to Claim 7, **characterized in that** a first coolant line (38), which is guided in a cable (2) that is connected to the plug connector part (3), for supplying a coolant is connected to the first heat sink (35A) and a second coolant line (39), which is guided in the cable (2), for discharging the coolant is connected to the second heat sink (35B).

9. Plug connector part (3) according to one of the preceding claims, **characterized in that** a plurality of heat sinks (35A, 35B) are connected to one another by means of a connecting element (350) and are held at a distance from one another by means of the connecting element (350) in such a way that the heat sinks (35A, 35B) do not touch each other.

## Revendications

1. Elément connecteur (3) destiné à être connecté à un élément connecteur homologue (40), comprenant
- un boîtier (30) qui présente une partie d'enfichage (300, 301) pour une connexion par enfichage avec l'élément connecteur homologue (40),
- au moins un élément de contact (31A, 31B) disposé sur la partie d'enfichage (300, 301) et destiné à établir un contact électrique avec un élément de contact homologue associé (400) de l'élément connecteur homologue (40),
- un conduit de conduction thermique (34A, 34B) relié audit au moins un élément de contact (31A, 31B), et
- un dissipateur thermique (35A, 35B) disposé dans le boîtier (30) et qui est en liaison de conduction thermique avec ledit au moins un élément de contact (31A, 31B) pour dissiper la chaleur dudit au moins un élément de contact (31A, 31B) par l'intermédiaire du conduit de conduction thermique (34A, 34B),
**caractérisé en ce que** le conduit de conduction thermique (34A, 34B) est enfiché par une première extrémité (340) dans une ouverture (331) d'un élément de raccordement métallique (33A, 33B) et est connecté à l'élément de contact associé (31A, 31B) par l'intermédiaire de l'élément de raccordement (33A, 33B) .

2. Elément connecteur (3) selon la revendication 1, **caractérisé en ce que** l'élément connecteur (3) présente une pluralité d'éléments de contact (31A, 31B) disposés sur la partie d'enfichage (300, 301), chaque élément de contact (31A, 31B) étant associé à un dissipateur thermique (35A, 35B) qui est en liaison de conduction thermique avec l'élément de contact associé (31A, 31B) par l'intermédiaire d'un conduit de conduction thermique (34A, 34B).

3. Elément connecteur (3) selon la revendication 1 ou 2, **caractérisé en ce que** le conduit de conduction thermique (34A, 34B) et/ou le dissipateur thermique (35A, 35B) sont fabriqués en métal.

4. Elément connecteur (3) selon l'une quelconque des revendications précédentes, **caractérisé en ce que** le conduit de conduction thermique (34A, 34B) est enfiché par une deuxième extrémité (340) dans une ouverture (351) du dissipateur thermique (35A, 35B).

5. Elément connecteur (3) selon l'une quelconque des revendications précédentes, **caractérisé en ce que** le dissipateur thermique (35A, 35B) présente un canal de fluide (352, 353) pouvant être traversé par un agent réfrigérant.

6. Elément connecteur (3) selon l'une quelconque des revendications précédentes, **caractérisé en ce que** le dissipateur thermique (35A, 35B) présente deux canaux de fluide (352, 353) qui sont en communication fluidique l'un avec l'autre par l'intermédiaire d'un conduit de déviation (36A, 36B) relié au dissipateur thermique (35A, 35B).

7. Elément connecteur (3) selon l'une quelconque des revendications précédentes, **caractérisé en ce qu'**un canal de fluide (352) d'un premier dissipateur thermique (35A), associé à un premier élément de contact (31A), est relié à un canal de fluide (352) d'un deuxième dissipateur thermique (35B) associé à un deuxième élément de contact (31B), par l'intermédiaire d'un conduit de déviation (37).

8. Elément connecteur (3) selon la revendication 7, **caractérisé en ce qu'**un premier conduit d'agent réfrigérant (38), posé dans un câble (2) relié à l'élément connecteur (3) et destiné à apporter un agent réfrigérant, est relié au premier dissipateur thermique (35A), et un deuxième conduit d'agent réfrigérant (39), posé dans le câble (2) et destiné à évacuer l'agent réfrigérant, est relié au deuxième dissipateur thermique (35B).

9. Elément connecteur (3) selon l'une quelconque des revendications précédentes, **caractérisé en ce que** plusieurs dissipateurs thermiques (35A, 35B) sont reliés les uns aux autres par un élément de liaison (350), et sont maintenus à distance les uns des autres par l'élément de liaison (350) de telle sorte que les dissipateurs thermiques (35A, 35B) n'entrent pas en contact les uns avec les autres.
